# EUROPÄISCHE PATENTSCHRIFT

(11) **EP 2 671 829 B1**
(45) Veröffentlichungstag und Bekanntmachung des Hinweises auf die Patenterteilung: **12.07.2017**
(21) Anmeldenummer: 13166680.2
(22) Anmeldetag: 06.05.2013
(51) Int. Cl.: B65H 23/025, A22C 17/00, B26D 7/32

(54) **Spreizeinrichtung**
Expander device
Dispositif d'écartement

(30) Priorität: 14.05.2012 DE 102012009648
(43) Veröffentlichungstag der Anmeldung: 11.12.2013
(73) Patentinhaber: Weber Maschinenbau GmbH Breidenbach, 35236 Breidenbach (DE)
(72) Erfinder: Vogler, Mario, 17098 Friedland (DE)
(74) Vertreter: Manitz Finsterwald Patentanwälte PartmbB

(56) Entgegenhaltungen:
- EP-A1- 2 420 363
- EP-A2- 0 309 818
- EP-A2- 1 386 869
- WO-A1-2009/149322
- DE-A1- 19 926 461
- DE-A1-102008 018 173
- DE-U1- 8 717 253

## Beschreibung

Die vorliegende Erfindung betrifft eine Vorrichtung zum Aufschneiden von Lebensmittelprodukten, insbesondere einen Hochleistungsslicer, mit wenigstens einer Blattzuführung. Die Erfindung betrifft weiterhin eine Vorrichtung zum Fördern von Lebensmittelprodukten mit wenigstens einer Blattzuführung.

Blattzuführungen für Vorrichtungen zum Aufschneiden bzw. Fördern oder Transportieren von Lebensmittelprodukten sind bekannt. Dabei kann zwischen Zwischenblattzuführungen für Slicer, die auch als "Interleaver" bezeichnet werden, und Unterblattzuführungen für Förderlinien, die auch als "Underleaver" bezeichnet werden, unterschieden werden. Die "Underleaver" dienen dazu, den Produkten, insbesondere Portionen aus mehreren, gestapelten oder geschindelten Produktscheiben, ein Blatt unterzulegen, d.h. dafür zu sorgen, dass die Produkte zumindest nicht mit ihrer gesamten Unterseite auf einer Fördereinrichtung, z.B. einem Endlosförderband, aufliegen. Die vorliegende Erfindung ist sowohl in Zwischen- als auch in Unterblattzuführungen einsetzbar. Im Folgenden wird die erfindungsgemäße Spreizeinrichtung im Kontext einer Zwischenblattzuführung beschrieben, jedoch sind alle Ausführungen ebenfalls für Unterblattzuführungen gültig.

Eine Vorrichtung zum Aufschneiden von Lebensmitteln ist aus der DE 199 26 461 A1 bekannt, wobei die Vorrichtung eine Zwischenblattzuführung umfasst. Das parallele mehrspurige Aufschneiden von Lebensmittelprodukten ist in der EP 2 420 363 A1 offenbart.

In der EP 0 309 818 A2 ist eine Vorrichtung zum Trennen von Materialbahnen in Teilbahnen gezeigt. Die Vorrichtung wird z.B. in Kombination mit Verpackungsmaschinen verwendet.

Bekannte Zwischenblattzuführungen verfügen über eine Materialbahn, die einer Schneidebene des Slicers zugeführt wird, wobei die Materialbahn in der Schneidebene zu Zwischenblättern aufgeschnitten wird, die im Aufschneidevorgang zwischen einzelne Produktscheiben gelangen. Auf diese Weise können mit Hochleistungsslicern vollautomatisch Lebensmittelprodukte aufgeschnitten und durch Zwischenblätter separiert werden. Zusammen mit Verpackungsmaschinen können derartige Slicer effiziente Produktionslinien bilden, mit denen Packungen mit Portionen aus voneinander durch Zwischenblätter getrennten Produktscheiben produziert werden können.

Es ist auch bekannt, mit einem Slicer parallel mehrere Lebensmittelprodukte gleichzeitig aufzuschneiden. Einem derartigen Mehrspurbetrieb kommt in der Praxis eine zunehmende Bedeutung zu. Werden für die Produkte Zwischenblätter benötigt, so ist es erforderlich, mehrere Zwischenblattzuführungen parallel einzusetzen, was einen erheblichen Aufwand bedeutet, da jede Komponente der Zwischenblattzuführung entsprechend der Anzahl der Spuren mehrfach vorgesehen werden muss.

Der vorliegenden Erfindung liegt die Aufgabe zugrunde, eine Aufschneidevorrichtung und eine Fördervorrichtung anzugeben, welche eine möglichst einfache, Material sparende und flexible Bereitstellung von Zwischenblättern für mehrere Spuren ermöglichen.

Diese Aufgabe wird durch die Gegenstände der unabhängigen Ansprüche gelöst. Bevorzugte Weiterbildungen und Ausführungsformen der Erfindung sind auch in den abhängigen Ansprüchen sowie den Zeichnungen angegeben.

Die Erfindung betrifft also insbesondere eine Vorrichtung zum Aufschneiden von Lebensmittelprodukten, insbesondere einen Hochleistungsslicer, mit einer Produktzuführung, mit der mehrere Lebensmittelprodukte gleichzeitig in parallelen Spuren einer Schneidebene zuführbar sind, in der sich wenigstens ein Schneidmesser, insbesondere rotierend und/oder umlaufend, bewegt, einem Zwischenblattvorrat, in welchem eine Materialbahn, insbesondere zu einer Rolle gewickelt, vorliegt, wenigstens einer Transportvorrichtung, die die Materialbahn zur Schneidebene transportiert, und zumindest eine Zwischenblattzuführung. Die Blattzuführung umfasst zumindest eine Spreizeinrichtung, wobei die Spreizeinrichtung dazu ausgebildet ist, eine einlaufende Materialbahn in zumindest zwei zueinander versetzt laufende Teilbahnen aufzuteilen und in jeder Spur zwischen einzelnen Produktscheiben und/oder zwischen von mehreren Produktscheiben gebildeten Portionen jeweils ein von einer Teilbahn stammendes Blatt bereitzustellen, wobei insbesondere für jede Spur eine Teilbahn vorgesehen ist.

Erfindungsgemäß teilt die Spreizeinrichtung somit eine einlaufende Materialbahn in zumindest zwei zueinander versetzt laufende Teilbahnen auf. Die Teilbahnen können anschließend den einzelnen Spuren eines Slicer zugeführt werden. Vorteilhaft ist, dass die Zufuhr der beiden Teilbahnen quasi unabhängig voneinander erfolgen kann, d.h. im Falle eines in der Praxis bei mehrspurigen Slicern auftretenden unterschiedlichen Bedarfs an Zwischenblättern in den einzelnen Spuren können die Teilbahnen unterschiedlich schnell und/oder mit individuellen Pausenzeiten zugeführt werden, was insbesondere im Rahmen eines Leerschnittmanagements für einen mehrspurigen Slicers von Bedeutung ist.

Vorteilhafterweise kann somit durch die Erfindung bei einer parallelen Verarbeitung von mehreren Lebensmittelprodukten auf das Vorsehen mehrerer separater Zwischenblattzuführungen verzichtet werden, da durch die erfindungsgemäße Spreizeinrichtung eine Zwischenblattzuführung in der Lage ist, zwei oder mehr Teilbahnen - die aus einer einzigen einlaufenden Materialbahn gebildet werden - der Schneidebene zuzuführen.

Mit "Spreizen" ist dabei nicht nur ein kontinuierliches V-förmiges Auseinanderlaufen der Teilbahnen gemeint, vielmehr ist "Spreizen" breit zu verstehen und umfasst insbesondere auch ein Aufschneiden und/oder ein Versetzen einer oder mehrerer Teilbahnen, wobei die Teilbahnen nach dem Spreizen bzw. aufgrund des Spreizens auch parallel versetzt zueinander verlaufen können.

In einer vorteilhaften Weiterbildung der Erfindung kann der Versatz der Teilbahnen, d.h. der Abstand zwischen den Teilbahnen, auf den Spurabstand des Slicers eingestellt werden, wodurch die Zwischenblattzuführung flexibel eingesetzt werden kann.

Folglich kann hierdurch die Flexibilität der Zwischenblattzuführung erhöht, also deren Verwendbarkeit für verschiedene Anwendungen verbessert werden, da es die Spreizeinrichtung ermöglicht, prinzipiell beliebig viele Teilbahnen zu erzeugen.

Die Spreizeinrichtung kann so ausgestaltet sein, dass die einlaufende Materialbahn und die Teilbahnen senkrecht zu einer gemeinsamen Vertikalebene oder in zueinander parallelen Vertikalebenen verlaufen. Die Verlaufsrichtung bzw. die Förderrichtung der einlaufenden Materialbahn einerseits und der Teilbahnen andererseits sind also insofern gleichgerichtet, als keine "Kurven" nach links oder rechts beschrieben werden. Die Teilbahnen können also bezüglich der Ebene der einlaufenden Materialbahn zwar "nach oben" oder "nach unten" umgelenkt werden, wobei aber keine Richtungsänderung "zur Seite" erfolgt.

Bevorzugt weist die Spreizeinrichtung zumindest eine Schneidvorrichtung auf, welche die Materialbahn in die Teilbahnen zerschneidet. Die Schneidvorrichtung bildet somit den Übergangspunkt zwischen der einlaufenden Materialbahn und den Teilbahnen.

Vorzugsweise ist für jede Teilbahn wenigstens ein Paar von aufeinander folgenden Umlenkmitteln vorgesehen, welche die Teilbahn gegensinnig umlenken und insbesondere jeweils um den gleichen Betrag bezüglich der ursprünglichen Verlaufsrichtung auslenken. Hierdurch laufen die Teilbahnen nach den Umlenkmitteln parallel zueinander, wobei der Versatz zwischen den Teilbahnen durch die Anordnung und Ausgestaltung der Umlenkmittel bestimmt ist.

Nach einer bevorzugten Weiterbildung der Erfindung weist die Spreizeinrichtung zumindest zwei erste Umlenkmittel auf, deren Umlenkachsen schräg zu einer Verlaufsrichtung der Materialbahn liegen, wobei jedes erste Umlenkmittel eine Teilbahn umlenkt. Die schräg zu der Verlaufsrichtung angeordneten Umlenkachsen bewirken ein Auseinanderlaufen der Teilbahnen.

Insbesondere können die ersten Umlenkmittel symmetrisch zu der Schneidvorrichtung bzw. der Verlaufsrichtung der einlaufenden Materialbahn angeordnet sein. Hierdurch laufen die Teilbahnen symmetrisch auseinander.

Bevorzugt liegen die Umlenkachsen der ersten Umlenkmittel in der Ebene der Materialbahn. Die Umlenkung der Teilbahnen erfolgt somit aus der Ebene der einlaufenden Materialbahn heraus.

Die Schneidvorrichtung ist im Bereich zwischen den ersten Umlenkmitteln angeordnet, wobei dies aber nicht zwingend ist und die Schneidvorrichtung auch in Laufrichtung gesehen vor den Umlenkmitteln angeordnet sein kann, so dass die mittels der Schneidvorrichtung erzeugten Teilbahnen zunächst ohne Versatz unmittelbar nebeneinander her bis zu den Umlenkmitteln verlaufen.

Vorzugsweise weist die Spreizeinrichtung zumindest zwei jeweils dem ersten Umlenkmittel nachgeordnete zweite Umlenkmittel auf, deren Umlenkachsen jeweils zu der Umlenkachse des ersten Umlenkmittels parallel verschoben sind. Hierdurch wird erreicht, dass die Teilbahnen nach den Umlenkmitteln wieder parallel verlaufen.

Insbesondere ist an zumindest einer Teilbahn der Versatz zwischen den Teilbahnen durch Verändern des Abstands zwischen den ersten und zweiten Umlenkachsen einstellbar.

Alternativ oder zusätzlich ist an zumindest einer Teilbahn der Versatz zwischen den Teilbahnen durch Verändern des Winkels zwischen den Umlenkachsen und der Verlaufsrichtung der Materialbahn einstellbar.

Des Weiteren kann alternativ oder zusätzlich vorgesehen sein, dass an zumindest einer Teilbahn der Versatz zwischen den Teilbahnen durch Verändern der Größe des Umlenkwinkels an zumindest einem der Umlenkmittel einstellbar ist.

Ein jeweils gewünschter Versatz kann also durch die Veränderung mehrerer Parameter eingestellt und somit durch verschiedene Kombinationen dieser Parameter erreicht werden. Ein aufwändiges Umrüsten der Spreizeinrichtung oder gar deren Auswechslung gegen eine anders konfigurierte Spreizeinrichtung ist für das Umstellen auf eine andere Anwendung nicht notwendig.

Von besonderem Vorteil ist, dass die erwähnten Ein- bzw. Verstellungen stufenlos erfolgen können und somit die Größe des Versatzes stufenlos eingestellt werden kann.

Vorzugsweise ist die erfindungsgemäße Spreizeinrichtung zwischen einem Neutralzustand, in welchem die einlaufende Materialbahn ungeteilt durchläuft (Monobetrieb) und/oder in zueinander unversetzte Teilbahnen aufgeteilt wird, und einem Aufteilzustand umstellbar, in welchem die einlaufende Materialbahn in die Teilbahnen aufgeteilt wird (z.B. Tandembetrieb bei zwei Teilbahnen). Dies ist insbesondere von Vorteil, wenn ein Slicer oder eine Produktionslinie, welche die erfindungsgemäße Spreizeinrichtung umfasst, flexibel eingesetzt werden soll und für bestimmte Anwendungen mehrere Teilbahnen benötigt werden, es aber auch gewünscht sein kann, die einlaufende Materialbahn nur aufzuteilen und/oder lediglich durchzuleiten. Der Neutralzustand kann beispielsweise dadurch erzeugt werden, dass der Winkel zwischen den Umlenkachsen und der Verlaufsrichtung der Materialbahn auf 90° eingestellt wird. Dadurch wirken die Umlenkmittel wie herkömmliche Umlenkwalzen oder Umlenkrollen und erzeugen keinen Versatz. Alternativ oder zusätzlich können die ersten und zweiten Umlenkmittel außer Eingriff mit der einlaufenden Materialbahn gefahren werden.

Die Erfindung betrifft weiterhin eine Vorrichtung zum Fördern von Lebensmittelprodukten gemäß Anspruch 12.

Nachfolgend wird die Erfindung beispielhaft anhand der beigefügten Zeichnungen beschrieben. Es zeigen, jeweils in schematischer Darstellung:
- Fig. 1: eine Seitenansicht eines Hochleistungsslicers mit einer Zwischenblattzuführung, welche eine Spreizeinrichtung umfasst;
- Fig. 2: eine Seitenansicht einer erfindungsgemäßen Spreizeinrichtung;
- Fig. 3: eine Draufsicht einer ersten Ausführungsform einer erfindungsgemäßen Spreizeinrichtung; und
- Fig. 4: eine Draufsicht einer zweiten Ausführungsform einer erfindungsgemäßen Spreizeinrichtung.

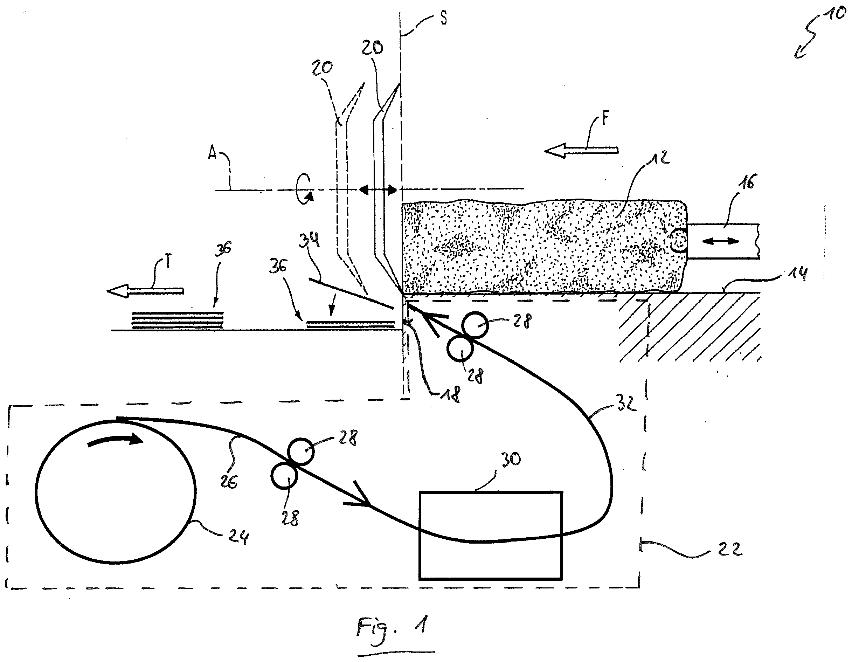

Fig. 1 zeigt schematisch eine Seitenansicht eines Hochleistungsslicers 10, der dazu dient, Lebensmittelprodukte 12, wie beispielhaften Fleisch, Wurst, Schinken oder Käse, in Scheiben zu schneiden. Während des Schneidvorgangs liegen die Lebensmittelprodukte 12 auf einer Produktauflage 14 auf und werden mittels einer Produktzuführung 16 entlang einer Produkt-Zuführrichtung F in Richtung einer Schneidebene S bewegt. Die Zuführrichtung F verläuft senkrecht zur Schneidebene S. Dabei können parallel in mehreren Spuren nebeneinander liegende Lebensmittelprodukte 12 gleichzeitig zugeführt und aufgeschnitten werden.

Von der Produktzuführung 16 ist in Fig. 1 lediglich ein so genannter Produkthalter dargestellt, der mit Krallen bzw. Greifern in das hintere Ende der Produkte 12 eingreift und durch nicht dargestellte Antriebsmittel in und gegen die Produktzuführrichtung F antreibbar ist, wie es durch den Doppelpfeil angedeutet ist. Bei einem Mehrspurbetrieb kann die Produktzufuhr spurindividuell, d.h. in jeder Spur zumindest im erforderlichen Rahmen unabhängig von den jeweils anderen Spuren, erfolgen.

Die Schneidebene S ist durch eine auch als Gegenmesser bezeichnete Schneidkante 18 definiert, die den vorderen Abschluss der Produktauflage 14 bildet. Während des Aufschneidebetriebs wirkt die Schneidkante 18 mit einer Schneide eines Schneidmessers 20 zusammen. Das Schneidmesser 20 kann ein so genanntes Kreismesser sein, das sowohl um eine nicht dargestellte Achse planetarisch umläuft als auch um eine eigene Drehachse A rotiert. Alternativ kann es sich bei dem Schneidmesser 20 um ein so genanntes Sichel- oder Spiralmesser handeln, das nicht planetarisch umläuft, sondern lediglich um die Achse A rotiert.

Im unteren Bereich des Hochleistungsslicers 10 ist schematisch eine Zwischenblattzuführung 22 dargestellt, in welcher eine zu einer Rolle 24 gewickelte Materialbahn 26 mittels Transportvorrichtungen 28 zunächst zu einer Spreizeinrichtung 30 gelangt und die dort in nachstehend erläuterter Weise entstehenden Teilbahnen 32 zu der Schneidebene S transportiert werden. Die Spreizeinrichtung 30 erzeugt dabei mehrere parallel in einer Ebene verlaufende Teilbahnen 32, und zwar für jede Spur des Slicers eine Teilbahn 32. Jede Teilbahn 32 umfasst eigene Transportvorrichtungen 28, welche die Teilbahnen 32 zumindest weitgehend unabhängig voneinander der Schneidebene S zuführen können.

Bei einem portionsweisen Aufschneiden der Lebensmittelprodukte 12, wie es in Fig. 1 gemäß einem möglichen Betrieb des Slicers beispielhaft dargestellt ist, bilden die abgetrennten Produktscheiben 34 Produktstapel 36, die in Fig. 1 als Scheibenstapel dargestellt sind. Sobald ein Produktstapel 36 fertiggestellt ist, wird dieser in einer Transportrichtung T abtransportiert. Damit für den Abtransport der fertigen Stapel 36 genügend Zeit zur Verfügung steht, werden bis zum Beginn des Aufschneidens der nächsten Stapel 36 die erwähnten Leerschnitte ausgeführt, wozu einerseits die Produktzuführung 16 und die Transportvorrichtungen 28 für die Teilbahnen 32 gestoppt werden und andererseits das Schneidmesser 20 in die in Fig. 1 gestrichelt dargestellte Stellung bewegt wird.

Während des Aufschneidens wird in jeder Spur bedarfsgemäß eine Teilbahn 32 zwischen aufeinanderfolgende Scheiben 34 geschoben und mittels des Schneidmessers 20 zerschnitten, wodurch jeweils ein Zwischenblatt entsteht. Der Bedarf an Zwischenblättern kann in den Spuren unterschiedlich sein, z.B. aufgrund von spurindividuell erforderlichen Leerschnitten, wie eingangs bereits erwähnt, aber auch aus anderen Gründen, worauf hier nicht näher eingegangen zu werden braucht.

Der hierdurch erforderliche individuelle Vorschub der Teilbahnen 32, die ja von einer gemeinsamen Materialbahn 26 stammen, ist tatsächlich unproblematisch, da der Bedarfsunterschied in den einzelnen Spuren gegenüber den Bahnlängen in der Praxis klein ist und z.B. durch ein Durchhängen der Teilbahnen 32 abgefangen werden kann.

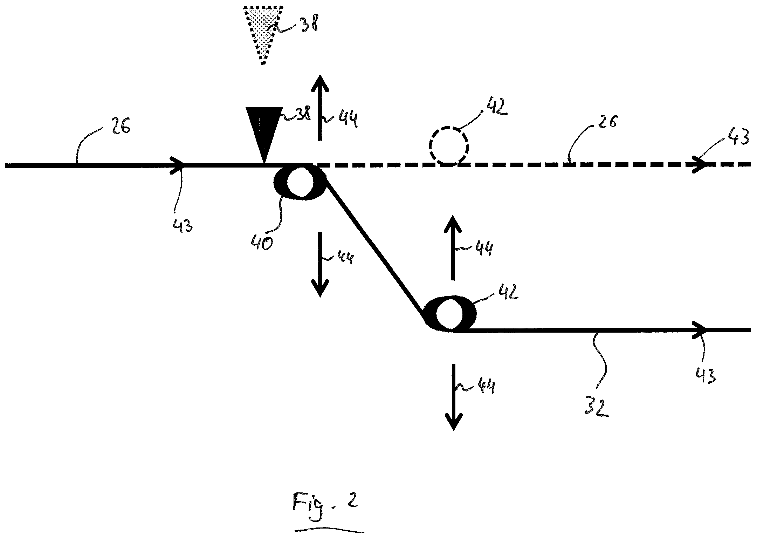

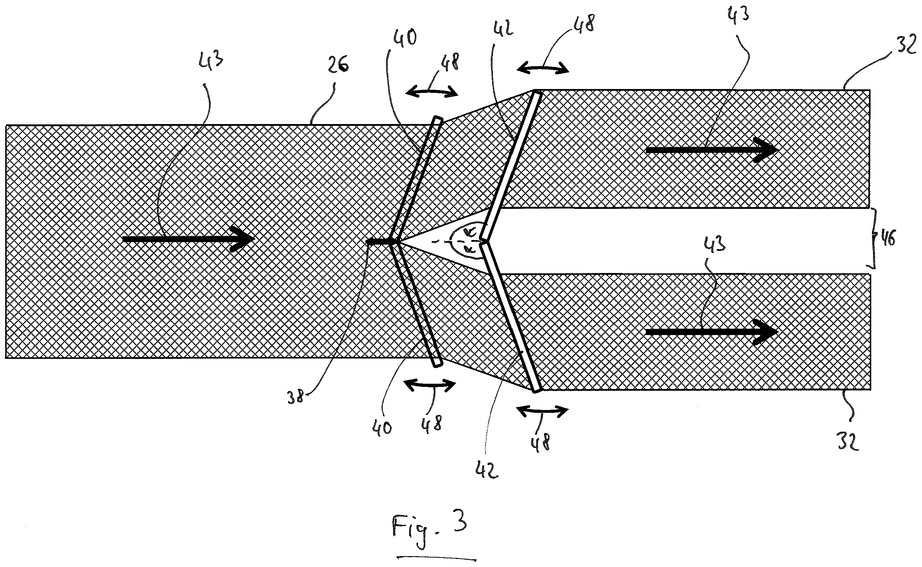

Fig. 2 zeigt eine schematische Seitenansicht der Spreizeinrichtung 30, wobei die einlaufende Materialbahn 26 zunächst durch eine Schneidvorrichtung 38 in zwei Teilbahnen 32 aufgeteilt wird. Die beiden Teilbahnen 32 verlaufen dabei in einer gemeinsamen Ebene und gelangen zu ersten Umlenkmitteln 40, die z.B. von schräg stehenden Walzen oder Rollen gebildet werden (vgl. Fig. 3), wobei aber auch z.B. einfach ein entsprechend gebogenes bzw. gekantetes Blechteil zur Umlenkung der Teilbahnen 32 verwendet werden kann. Die Teilbahnen 32 werden durch die ersten Umlenkmittel 40 um einen bestimmten Winkelbetrag nach unten hin umgelenkt, wobei dieser Umlenkwinkel durch die relative Lage zwischen den ersten Umlenkmitteln 40 und nachgeordneten zweiten Umlenkmitteln 42 vorgegeben ist, welche die Teilbahnen 32 im entgegengesetzten Sinn umlenken.

Die Führung der Teilbahnen 32 durch nachgelagerte, hier nicht dargestellte Mittel ist derart gewählt, dass die Teilbahnen 32 jeweils um den gleichen Winkel umgelenkt werden. Nach der Umlenkung durch die zweiten Umlenkmittel 42 verlaufen die Teilbahnen 32 somit parallel zur Ebene der einlaufenden Materialbahn 26.

Aus diesem Aufteilzustand kann die erfindungsgemäße Spreizeinrichtung in einen Neutralzustand überführt werden, in welchem die einlaufende Materialbahn 26 z.B. ungeteilt durchläuft oder in zueinander unversetzte Teilbahnen aufgeteilt wird. Dieser Neutralzustand mit ungeteilt durchlaufender Materialbahn 26 ist in Fig. 2 gestrichelt angedeutet. Um in den Neutralzustand zu gelangen, können die ersten und zweiten Umlenkmittel 40, 42 in der Verstellrichtung 44 bewegt und so entweder völlig außer Eingriff mit der Materialbahn 26 oder in eine die Materialbahn 26 lediglich berührende, aber nicht umlenkende Position verstellt werden.

Zusätzlich wird die Schneidvorrichtung 38 nach oben verstellt, so dass sie sich nicht mehr in Wirkeingriff mit der Materialbahn 26 befindet. Folglich läuft die Materialbahn 26 unverändert durch die im Neutralzustand befindliche Spreizeinrichtung 30 hindurch.

Fig. 3 zeigt eine schematische Ansicht der erfindungsgemäßen Spreizeinrichtung 30 von oben. Die einlaufende Materialbahn 26 wird durch die Schneidvorrichtung 38 in die beiden Teilbahnen 32 aufgeteilt, welche über die schräg zur Verlaufsrichtung 43 und in der Ebene der Materialbahn 26 angeordneten ersten Umlenkmittel 40 nach unten und durch die parallel zu den ersten Umlenkmitteln 40 orientierten zweiten Umlenkmittel 42 wieder zurück in eine parallel zur ursprünglichen Ebene verlaufende Ebene umgelenkt werden.

Zwischen den beiden Teilbahnen 32 wird nach den ersten Umlenkmitteln 40 durch die entgegengesetzt schräge Ablenkung der somit auseinander laufenden Teilbahnen 32 der Abstand in Verlaufsrichtung 43 immer größer. Nach den zweiten Umlenkmitteln 42 bleibt durch deren Ausrichtung parallel zu den ersten Umlenkmitteln 40 der Abstand zwischen den Teilbahnen 32 konstant. Wie man sich leicht klarmacht, ist der resultierende Versatz 46 z.B. umso größer, je größer der Abstand zwischen den ersten Umlenkmitteln 40 und den zweiten Umlenkmitteln 42 ist. Dementsprechend lässt sich z.B. über den Abstand zwischen den ersten und zweiten Umlenkmitteln 40, 42 die Größe des Versatzes 46 einstellen.

Weiterhin lässt sich z.B. der Winkel α der ersten und zweiten Umlenkmittel 40, 42 zur Verlaufsrichtung 43 der Materialbahn 26 verändern, wie durch die Pfeile 48 angedeutet. Ist α gleich 90°, so entsteht kein Versatz. Bei einem Winkel α von mehr als 90° steigt der Versatz 46 mit zunehmendem Winkel α an.

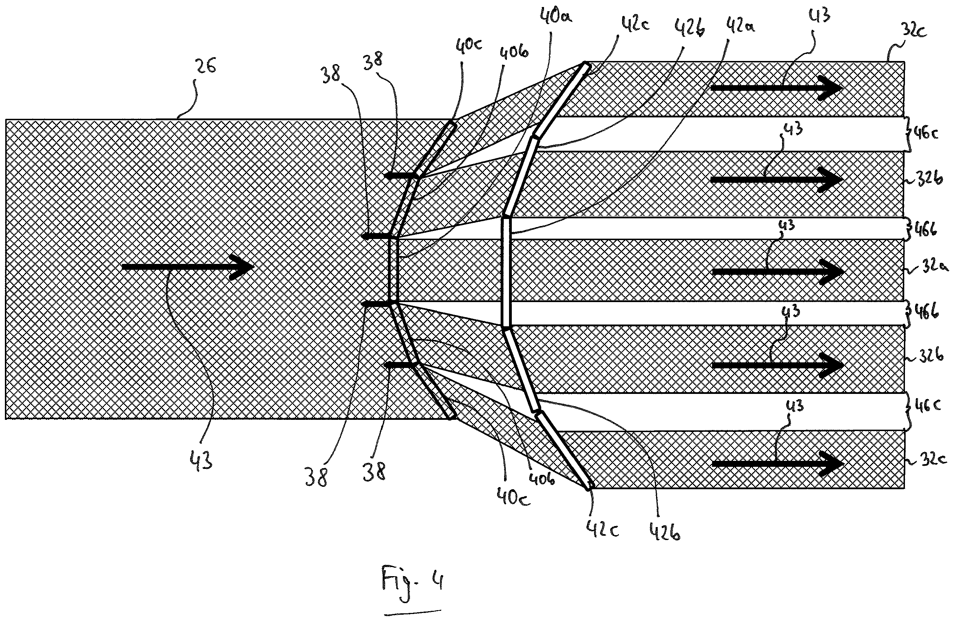

Eine schematische Draufsicht auf eine weitere Ausführungsform der erfindungsgemäßen Spreizeinrichtung zeigt Fig. 4.

Hier wird eine einlaufende Materialbahn 26 in fünf Teilbahnen 32 aufgeteilt, wobei die Teilbahnen 32 unterschiedliche Breiten aufweisen können, was durch die Position der vier Schneidvorrichtungen 38 vorgegeben werden kann.

Die Spreizeinrichtung umfasst fünf erste Umlenkmittel 40 und fünf zweite Umlenkmittel 42. Das mittlere erste Umlenkmittel 40a sowie das mittlere zweite Umlenkmittel 42a stehen jeweils senkrecht zur Verlaufsrichtung 43, versetzen die mittlere Teilbahn 32a also nicht.

Die zu den mittleren Umlenkmitteln 40a, 42a benachbarten Umlenkmittel 40b, 42b stehen schräg und erzeugen einen Versatz 46b der Teilbahnen 32b. Die äußeren Umlenkmittel 40c, 42c weisen eine noch ausgeprägtere Schrägstellung auf und erzeugen somit einen noch größeren Versatz 46c. Im Ergebnis werden somit fünf zueinander versetzt laufende Teilbahnen 32a, 32b, 32c erzeugt, die in einer gemeinsamen Ebene parallel zueinander verlaufen.

Wesentliche Vorteile der Erfindung bestehen insbesondere darin, dass die Aufteilung der Materialbahn in die Teilbahnen im kontinuierlichen Betrieb erfolgt, dass das auch als Spreizung bezeichnete Versetzen der Teilbahnen stufenlos erfolgen kann, und dass es möglich ist, von einem auch als Monobetrieb bezeichneten Neutralzustand lediglich durch ein Verstellen der Spreizeinrichtung in einen Aufteilzustand zu wechseln, der bei zwei Teilbahnen auch als Tandembetrieb bezeichnet wird.

### Bezugszeichenliste

- 10: Hochleistungsslicer
- 12: Lebensmittelprodukt
- 14: Produktauflage
- 16: Produktzuführung
- 18: Schneidkante
- 20: Schneidmesser
- 22: Zwischenblattzuführung
- 24: Rolle
- 26: Materialbahn
- 28: Transportvorrichtung
- 30: Spreizeinrichtung
- 32, 32a, 32b, 32c: Teilbahnen
- 34: Produktscheibe
- 36: Produktstapel
- 38: Schneidvorrichtung
- 40, 40a, 40b, 40c: erste Umlenkmittel
- 42, 42a, 42b, 42c: zweite Umlenkmittel
- 43: Verlaufsrichtung
- 44: Verstellrichtung
- 46: Versatz
- 48: Verstellrichtung
- F: Zuführrichtung
- S: Schneidebene
- A: Drehachse
- T: Transportrichtung

## Patentansprüche

1. Vorrichtung zum Aufschneiden von Lebensmittelprodukten (12), insbesondere Hochleistungsslicer (10), mit:
einer Produktzuführung (16), mit der mehrere Lebensmittelprodukte (12) gleichzeitig in parallelen Spuren einer Schneidebene (S) zuführbar sind, in der sich wenigstens ein Schneidmesser (20), insbesondere rotierend und/oder umlaufend, bewegt, **gekennzeichnet durch** einen Blattvorrat, in welchem eine Materialbahn (26), insbesondere zu einer Rolle (24) gewickelt, vorliegt,
wenigstens eine Transportvorrichtung (28), die die Materialbahn (26) zur Schneidebene (S) transportiert, und
wenigstens eine Blattzuführung (22), wobei die Blattzuführung (22) zumindest eine Spreizeinrichtung (30) umfasst, wobei die Spreizeinrichtung (30) dazu ausgebildet ist, eine einlaufende Materialbahn (26) in zumindest zwei zueinander versetzt laufende Teilbahnen (32) aufzuteilen und
wobei die Blattzuführung dazu ausgebildet ist, in jeder Spur zwischen einzelnen Produktscheiben (34) und/oder zwischen von mehreren Produktscheiben (34) gebildeten Portionen (36) jeweils ein von einer Teilbahn (32) stammendes Blatt bereitzustellen, wobei insbesondere für jede Spur eine Teilbahn (32) vorgesehen ist.

2. Vorrichtung zum Aufschneiden von Lebensmittelprodukten (12) nach Anspruch 1,
**dadurch gekennzeichnet, dass**
die Teilbahnen (32) zueinander parallel versetzt sind.

3. Vorrichtung zum Aufschneiden von Lebensmittelprodukten (12) nach Anspruch 1 oder 2,
**dadurch gekennzeichnet, dass**
die Teilbahnen (32) nach der Spreizeinrichtung (30) parallel zueinander in einer gemeinsamen Ebene verlaufen.

4. Vorrichtung zum Aufschneiden von Lebensmittelprodukten (12) nach einem der vorstehenden Ansprüche,
**dadurch gekennzeichnet, dass**
die einlaufende Materialbahn (26) und die Teilbahnen (32) senkrecht zu einer gemeinsamen Vertikalebene oder in zueinander parallelen Vertikalebenen verlaufen.

5. Vorrichtung zum Aufschneiden von Lebensmittelprodukten (12) nach einem der vorstehenden Ansprüche,
**dadurch gekennzeichnet, dass**
die Spreizeinrichtung (30) zumindest eine Schneidvorrichtung (38) aufweist, welche die Materialbahn (26) in die Teilbahnen (32) zerschneidet.

6. Vorrichtung zum Aufschneiden von Lebensmittelprodukten (12) nach einem der vorstehenden Ansprüche,
**dadurch gekennzeichnet, dass**
für jede Teilbahn (32) wenigstens ein Paar von aufeinanderfolgenden Umlenkmitteln (40, 42) vorgesehen ist, welche die Teilbahn (32) gegensinnig umlenken und insbesondere jeweils um den gleichen Betrag bezüglich der ursprünglichen Verlaufsrichtung auslenken.

7. Vorrichtung zum Aufschneiden von Lebensmittelprodukten (12) nach einem der vorstehenden Ansprüche,
**dadurch gekennzeichnet, dass**
die Spreizeinrichtung (30) zumindest zwei erste Umlenkmittel (40) aufweist, deren Umlenkachsen schräg zu einer Verlaufsrichtung (43) der Materialbahn (26) liegen, wobei jedes erste Umlenkmittel (40) eine Teilbahn (32) umlenkt, wobei insbesondere die ersten Umlenkmittel (40) symmetrisch zu der Schneidvorrichtung (38) und/oder zu der Verlaufsrichtung (43) der Materialbahn (26) angeordnet sind.

8. Vorrichtung zum Aufschneiden von Lebensmittelprodukten (12) nach Anspruch 7,
**dadurch gekennzeichnet, dass** die Umlenkachsen der ersten Umlenkmittel (40) in der Ebene der Materialbahn (26) liegen,
und/oder
die Spreizeinrichtung (30) zumindest zwei jeweils dem ersten Umlenkmittel (40) nachgeordnete zweite Umlenkmittel (42) aufweist, deren Umlenkachsen jeweils zu der Umlenkachse des ersten Umlenkmittels (40) parallelverschoben sind,
wobei insbesondere
an zumindest einer Teilbahn (32) der Versatz (46) zwischen den Teilbahnen (32) durch Verändern des Abstands zwischen den ersten und zweiten Umlenkachsen einstellbar ist.

9. Vorrichtung zum Aufschneiden von Lebensmittelprodukten (12) nach Anspruch 7 oder 8,
**dadurch gekennzeichnet, dass** an zumindest einer Teilbahn (32) der Versatz (46) zwischen den Teilbahnen (32) durch Verändern des Winkels (α) zwischen den Umlenkachsen und der Verlaufsrichtung (43) der Materialbahn (26) einstellbar ist,
und/oder
an zumindest einer Teilbahn (32) der Versatz (46) zwischen den Teilbahnen (32) durch Verändern der Größe des Umlenkwinkels an zumindest einem der Umlenkmittel (40, 42) einstellbar ist.

10. Vorrichtung zum Aufschneiden von Lebensmittelprodukten (12) nach einem der vorstehenden Ansprüche,
**dadurch gekennzeichnet, dass**
die Spreizeinrichtung (30) zwischen einem Neutralzustand, in welchem die einlaufende Materialbahn (26) ungeteilt durchläuft und/oder in zueinander unversetzte Teilbahnen (32) aufgeteilt wird, und einem Aufteilzustand umstellbar ist, in welchem die einlaufende Materialbahn (26) in die Teilbahnen (32) aufgeteilt wird.

11. Vorrichtung zum Aufschneiden von Lebensmittelprodukten (12) nach einem der vorstehenden Ansprüche,
**dadurch gekennzeichnet, dass**
für zumindest eine Teilbahn (32) eine weitere Spreizeinrichtung (30) vorgesehen ist, welche dazu ausgebildet ist, die Teilbahn (32) in zumindest zwei weitere, zueinander versetzt laufende Teilbahnen (32) aufzuteilen.

12. Vorrichtung zum Fördern von Lebensmittelprodukten (12), insbesondere Sortier- und/oder Förderanlage, mit der mehrere Lebensmittelprodukte (12) gleichzeitig in parallelen Spuren transportierbar sind, **gekennzeichnet dadurch, dass** die Vorrichtung umfasst:
einen Blattvorrat, in welchem eine Materialbahn (26), insbesondere zu einer Rolle (24) gewickelt, vorliegt,
wenigstens eine Transportvorrichtung (28), die die Materialbahn (26) zu den Produkten (12) transportiert, und
wenigstens eine Blattzuführung (12),
wobei
die Blattzuführung (22) zumindest eine Spreizeinrichtung (30) umfasst, wobei die Spreizeinrichtung (30) dazu ausgebildet ist, eine einlaufende Materialbahn (26) in zumindest zwei zueinander versetzt laufende Teilbahnen (32) aufzuteilen und
wobei die Blattzuführung dazu ausgebildet ist, in jeder Spur einem Produkt (12) ein von einer Teilbahn (32) stammendes Blatt unterzulegen, wobei insbesondere für jede Spur eine Teilbahn (32) vorgesehen ist.

## Claims

1. An apparatus for slicing food products (12), in particular a high-performance slicer (10), comprising:
a product feed (16) by which a plurality of food products (12) can simultaneously be supplied in parallel tracks to a cutting plane (S) in which at least one cutting blade (20) moves, in particular in a rotating and/or revolving manner,
**characterized by**
a sheet supply in which a material web (26) is present which is in particular wound to form a roll (24);
at least one transport apparatus (28) which transports the material web (26) to the cutting plane (S); and
at least one sheet feed (22),
wherein
the sheet feed (22) comprises at least one spreading device (30), with the spreading device (30) being configured to divide an incoming material web (26) into at least two part webs (32) which extend offset from one another; and
wherein the sheet feed is configured to
provide, in each track, a respective sheet, which originates from a part web (32), between individual product slices (34) and/or between portions (36) formed by a plurality of product slices (34), with a part web (32) in particular being provided for each track.

2. An apparatus for slicing food products (12) in accordance with claim 1,
**characterized in that**
the part webs (32) are offset in parallel from one another.

3. An apparatus for slicing food products (12) in accordance with claim 1 or claim 2,
**characterized in that**
the part webs (32) extend in parallel with one another in a common plane after the spreading device (30).

4. An apparatus for slicing food products (12) in accordance with any one of the preceding claims,
**characterized in that**
the incoming material web (26) and the part webs (32) extend perpendicular to a common vertical plane or in mutually parallel vertical planes.

5. An apparatus for slicing food products (12) in accordance with any one of the preceding claims,
**characterized in that**
the spreading device (30) has at least one cutting apparatus (38) which cuts the material web (26) into the part webs (32).

6. An apparatus for slicing food products (12) in accordance with any one of the preceding claims,
**characterized in that**
at least one pair of consecutive deflection means (40, 42) is provided for each part web (32), said deflection means deflecting the part web (32) in opposite senses and in particular deflecting it by the same respective amount with respect to the original direction of extent.

7. An apparatus for slicing food products (12) in accordance with any one of the preceding claims,
**characterized in that**
the spreading device (30) has at least two first deflection means (40) whose deflection axes lie obliquely to a direction of extent (43) of the material web (26), wherein each first deflection means (40) deflects a part web (32); and wherein in particular
the first deflection means (40) is arranged symmetrically to the cutting apparatus (38) and/or to the direction of extent (43) of the material web (26).

8. An apparatus for slicing food products (12) in accordance with claim 7,
**characterized in that**
the deflection axes of the first deflection means (40) lie in the plane of the material web (26);
and/or
**in that** the spreading device (30) has at least two second deflection means (42) which are each arranged downstream of the first deflection means (40) and whose deflection axes are each displaced in parallel with the deflection axis of the first deflection means (40), wherein in particular
the offset (46) between the part webs (32) can be set at at least one part web (32) by changing the spacing between the first and second deflection axes.

9. An apparatus for slicing food products (12) in accordance with claim 7 or claim 8,
**characterized in that**
the offset (46) between the part webs (32) can be set at at least one part web (32) by changing the angle (α) between the deflection axes and the direction of extent (43) of the material web (26);
and/or
**in that** the offset (46) between the part webs (32) can be set at at least one part web (32) by changing the amount of the deflection angle at at least one of the deflection means (40, 42).

10. An apparatus for slicing food products (12) in accordance with any one of the preceding claims,
**characterized in that**
the spreading device (30) can be switched between a neutral state in which the incoming material web (26) passes in an undivided manner and/or is divided into part webs (32) which are not offset from one another and a divided state in which the incoming material web (26) is divided into the part webs (32).

11. An apparatus for slicing food products (12) in accordance with any one of the preceding claims,
**characterized in that**
a further spreading device (30) is provided for at least one part web (32) and is configured to divide the part web (32) into at least two further part webs (32) which extend offset from one another.

12. An apparatus for conveying food products (12), in particular a sorting and/or conveying plant, by which a plurality of food products (12) can simultaneously be transported in parallel tracks, **characterized in that**
the apparatus comprises:
a sheet supply in which a material web (26) is present which is in particular wound to form a roll (24);
at least one transport apparatus (28) which transports the material web (26) to the products (12); and
at least one sheet feed (12),
wherein
the sheet feed (22) comprises at least one spreading device (30), with the spreading device (30) being configured to divide an incoming material web (26) into at least two part webs (32) which extend offset from one another; and
wherein the sheet feed is configured to
place a sheet originating from a part web (32) beneath a product (12) in each track, with a part web (32) in particular being provided for each track.

## Revendications

1. Dispositif de coupe de produits alimentaires (12), en particulier trancheuse à haute performance (10), comportant
une alimentation en produits (16) permettant d'amener à un plan de coupe (S) plusieurs produits alimentaires (12) simultanément en traces parallèles, plan dans lequel se déplace au moins un couteau de coupe (20) en particulier en rotation et/ou en révolution,
**caractérisé par**
une réserve de feuilles dans laquelle une bande de matériau (26) est enroulée en particulier en un rouleau (24),
au moins un dispositif de transport (28) qui transporte la bande de matériau (6) jusqu'au plan de coupe (S), et
au moins une alimentation en feuilles (22),
dans lequel l'alimentation en feuilles (22) comprend au moins un moyen écarteur (30), le moyen écarteur (30) étant conçu pour subdiviser une bande de matériau entrant (26) en au moins deux bandes partielles (32) décalées l'une par rapport à l'autre, et
l'alimentation en feuilles étant conçue pour mettre à disposition, dans la trace respective, une feuille respective provenant d'une bande partielle (32) entre des tranches de produit individuelles (34) et/ou entre des portions (36) formées par plusieurs tranches de produit (34), et en particulier une bande partielle (32) est prévue pour chaque trace.

2. Dispositif de coupe de produits alimentaires (12) selon la revendication 1,
**caractérisé en ce que**
les bandes partielles (32) sont décalées parallèlement les unes par rapport aux autres.

3. Dispositif de coupe de produits alimentaires (12) selon la revendication 1 ou 2,
**caractérisé en ce que**
après le moyen écarteur, les bandes partielles (32) s'étendent parallèlement les unes aux autres dans un plan commun.

4. Dispositif de coupe de produits alimentaires (12) selon l'une des revendications précédentes,
**caractérisé en ce que**
la bande de matériau entrant (26) et les bandes partielles s'étendent perpendiculairement à un plan vertical commun ou dans des plans verticaux parallèles l'un à l'autre.

5. Dispositif de coupe de produits alimentaires (12) selon l'une des revendications précédentes,
**caractérisé en ce que**
le moyen écarteur (30) comprend au moins un dispositif de coupe (38) qui coupe la bande de matériau (26) en bandes partielles (32).

6. Dispositif de coupe de produits alimentaires (12) selon l'une des revendications précédentes,
**caractérisé en ce que**
pour chaque bande partielle (32) est prévue au moins une paire de moyens de renvoi successifs (40, 42) qui renvoient la bande partielle (32) en sens opposé et qui la font dévier en particulier de la même valeur respective par rapport à la direction d'extension d'origine.

7. Dispositif de coupe de produits alimentaires (12) selon l'une des revendications précédentes,
**caractérisé en ce que**
le moyen écarteur (30) comprend au moins deux premiers moyens de renvoi (40) dont les axes de renvoi se trouvent en oblique par rapport à une direction d'extension (43) de la bande de matériau (26), et chaque premier moyen de renvoi (40) renvoie une bande partielle (32), et en particulier les premiers moyens de renvoi (40) sont agencés symétriquement par rapport au dispositif de coupe (38) et/ou à la direction d'extension (43) de la bande de matériau (26).

8. Dispositif de coupe de produits alimentaires (12) selon la revendication 7,
**caractérisé en ce que**
les axes de renvoi des premiers moyens de renvoi (40) se trouvent dans le plan de la bande de matériau (26),
et/ou
le moyen écarteur (30) comprend au moins deux seconds moyens de renvoi (42) agencés en aval du premier moyen de renvoi respectif (40), dont les axes de renvoi sont décalés parallèlement à l'axe de renvoi respectif du premier moyen de renvoi (40),
et en particulier, au moins sur une bande partielle (32), le décalage (46) entre les bandes partielles (32) est réglable par modification de la distance entre les premiers et les seconds axes de renvoi.

9. Dispositif de coupe de produits alimentaires (12) selon la revendication 7 ou 8,
**caractérisé en ce que**
sur au moins une bande partielle (32), le décalage (46) entre les bandes partielles (32) est réglable par modification de l'angle (α) entre les axes de renvoi et la direction d'extension (43) de la bande de matériau (26),
et/ou
sur au moins une bande partielle (32), le décalage (46) entre les bandes partielles (32) est réglable par modification de la valeur de l'angle de renvoi sur l'un au moins des moyens de renvoi (40, 42).

10. Dispositif de coupe de produits alimentaires (12) selon l'une des revendications précédentes,
**caractérisé en ce que**
le moyen écarteur (30) est commutable entre un état neutre dans lequel la bande de matériau entrant (26) passe sans être subdivisée ou passe en étant subdivisée en deux bandes partielles (32) non décalées l'une par rapport à l'autre, et un état de subdivision dans lequel la bande de matériau entrant (26) est subdivisée en bandes partielles (32).

11. Dispositif de coupe de produits alimentaires (12) selon l'une des revendications précédentes,
**caractérisé en ce que**
pour au moins une bande partielle (32), il est prévu un autre moyen écarteur (30) qui est conçu pour subdiviser la bande partielle (32) en au moins deux autres bandes partielles (32) décalées l'une par rapport à l'autre.

12. Dispositif de convoyage de produits alimentaires (12), en particulier installation de tri et/ou de convoyage, au moyen duquel/de laquelle plusieurs produits alimentaires (12) peuvent être transportés simultanément en traces parallèles,
**caractérisé en ce que** le dispositif comprend :
une réserve de feuilles dans laquelle une bande de matériau (26) est enroulée en particulier en un rouleau (24),
au moins un dispositif de transport (28) qui transporte la bande de matériau (26) jusqu'aux produits (12), et
au moins une alimentation en feuilles (22),
dans lequel l'alimentation en feuilles (22) comprend au moins un moyen écarteur (30), le moyen écarteur (30) étant conçu pour subdiviser une bande de matériau entrant (26) en au moins deux bandes partielles (32) décalées l'une par rapport à l'autre, et
l'alimentation en feuilles étant conçue pour poser une feuille provenant d'une bande partielle (32) au-dessous d'un produit (12) dans chaque trace, et en particulier une bande partielle (32) étant prévue pour chaque trace.
